# EUROPÄISCHE PATENTSCHRIFT

(11) **EP 1 582 747 B1**
(45) Veröffentlichungstag und Bekanntmachung des Hinweises auf die Patenterteilung: **06.09.2006**
(21) Anmeldenummer: 05006187.8
(22) Anmeldetag: 22.03.2005
(51) Int. Cl.: F04D 15/02, F24D 19/10

(54) **Verfahren zur Funktionsüberprüfung eines in eine Heizeinrichtung integrierten Pumpenmotors sowie Heizeinrichtung**
Method for testing the functioning of a pump motor integrated into a heating appliance and heating appliance
Procédé pour contrôler le fonctionnement d'un moteur de pompe intégré dans un appareil de chauffage et appareil de chauffage

(30) Priorität: 27.03.2004 DE 102004015153
(43) Veröffentlichungstag der Anmeldung: 05.10.2005
(73) Patentinhaber: Honeywell Technologies Sarl, 1024 Ecublens (CH)
(72) Erfinder: Vegter, Derk, 7833 BH Nieuw Amsterdam (NL)
(74) Vertreter: Sturm, Christoph

(56) Entgegenhaltungen:
- EP-A- 0 321 295
- EP-A- 1 255 174
- DE-A1- 2 851 728
- DE-A1- 10 101 099

## Beschreibung

Die Erfindung betrifft ein Verfahren zur Funktionsüberprüfung eines in eine Heizeinrichtung integrierten Pumpenmotors. Weiterhin betrifft die Erfindung eine Heizeinrichtung. Eine Heizeinrichtung mit den Merkmalen der Oberbegriffs von Anspruch 4 ist aus dem Dokument DE-A-2 851 728 bekannt.

In Heizeinrichtungen, insbesondere in Zentralheizeinrichtungen, die bei Vorliegen einer Wärmeanforderung der Erwärmung von insbesondere Wasser dienen, sind üblicherweise Pumpen integriert, die bei Vorliegen einer Wärmeanforderung das zu erhitzende Wasser durch die Heizeinrichtung fördern. Bei den in solchen Heizeinrichtungen verwendeten Pumpen handelt es sich insbesondere um Pumpen, die von einem Pumpenwechselspannungsmotor angetrieben sind. Bei einem solchen Pumpenwechselspannungsmotor handelt es sich zum Beispiel um einen Schaltpolmotor oder auch einen anderen Induktionsmotor.

Um eine Fehlfunktion der Heizeinrichtung sicher zu detektieren, ist es unter anderem erforderlich, dass bei einer Wärmeanforderung an die Heizeinrichtung eine Funktionsüberprüfung des Pumpenmotors durchgeführt wird, um so sicher festzustellen, ob der Pumpenmotor nach dem Einschalten desselben läuft oder blockiert ist, um also festzustellen, ob bei Vorliegen einer Wärmeanforderung zu erheizendes Wasser durch die Heizeinrichtung gefördert wird. Aus dem Stand der Technik sind keine Verfahren zur Funktionsüberprüfung eines in eine Heizeinrichtung integrierten Pumpenmotors bekannt, die eine zuverlässige sowie einfache Funktionsüberprüfung des Pumpenmotors ermöglichen.

Hiervon ausgehend liegt der vorliegenden Erfindung das Problem zu Grunde, ein neuartiges Verfahren zur Funktionsüberprüfung eines in eine Heizeinrichtung integrierten Pumpenmotors sowie eine Heizeinrichtung zu schaffen.

Dieses Problem wird durch ein Verfahren zur Funktionsüberprüfung eines in eine Heizeinrichtung integrierten Pumpenmotors mit den Merkmalen des Anspruchs 1 gelöst. Erfindungsgemäß umfasst das Verfahren zumindest die folgenden Schritte: a) bei Vorliegen einer Wärmeanforderung an die Heizeinrichtung wird der Pumpenmotor durch Anlegen einer Einschaltspannung eingeschaltet; b) unmittelbar nach dem Anlegen der Einschaltspannung wird der Pumpenmotorstrom über einen definierten Zeitraum gemessen und aus dieser Messung wird die zeitliche Ableitung des Pumpenmotorstroms ermittelt; c) aus der ermittelten zeitlichen Ableitung des Pumpenmotorstroms wird geschlossen, ob der Pumpenmotor läuft oder blockiert ist, und zwar derart, dass dann, wenn aus der zeitlichen Ableitung des Pumpenmotorstroms festgestellt wird, dass der Pumpenmotorstrom im wesentlichen konstant bleibt, auf ein Blockieren des Pumpenmotors geschlossen wird, und dass dann, wenn aus der zeitlichen Ableitung des Pumpenmotorstroms festgestellt wird, dass der Pumpenmotorstrom abfällt, auf ein Laufen des Pumpenmotors geschlossen wird.

Im Sinne der hier vorliegenden Erfindung wird vorgeschlagen, unmittelbar nach dem Vorliegen einer Wärmeanforderung und demnach unmittelbar nach dem Einschalten des Pumpenmotors die Ableitung des Pumpenmotorstroms zu ermitteln und die Funktionsüberprüfung anhand der ermittelten Ableitung des Pumpenmotorstroms durchzuführen. Aus der Ableitung des Pumpenmotorstroms kann geschlossen werden, ob der Pumpenmotor läuft oder blockiert ist. Da bei Pumpenwechselspannungsmotoren die absoluten Unterschiede im Pumpenmotorstrom bei einem laufenden Pumpenmotor und einem blockierten Pumpenmotor sehr gering sind, ermöglicht die hier vorliegenden Erfindung auch bei solchen Pumpenwechselspannungsmotoren eine zuverlässige, sichere und kostengünstige Funktionsüberprüfung.

Die erfindungemäße Heizeinrichtung ist in Anspruch 4 definiert. So umfasst dieselbe eine Einrichtung zur Durchführung des Verfahrens, mit einer Messeinrichtung zur Erfassung des Pumpenmotorstroms und einer Steuerungseinrichtung zur erfindungsgemäßen Auswertung desselben.

Bevorzugte Weiterbildungen der Erfindung ergeben sich aus den Unteransprüchen und der nachfolgenden Beschreibung. Nachfolgend wird ein Ausführungsbeispiel der Erfindung, ohne hierauf beschränkt zu sein, anhand der Zeichnung näher erläutert. In der Zeichnung zeigt:
- Fig. 1:: ein Signalflussdiagramm des erfindungsgemäßen Verfahrens zur Funktionsüberprüfung eines Pumpenmotors, insbesondere eines in eine Heizeinrichtung integrierten Pumpenwechselspannungsmotors; und
- Fig. 2:: die Messdiagramm zur weiteren Erläuterung des erfindungsgemäßen Verfahrens.

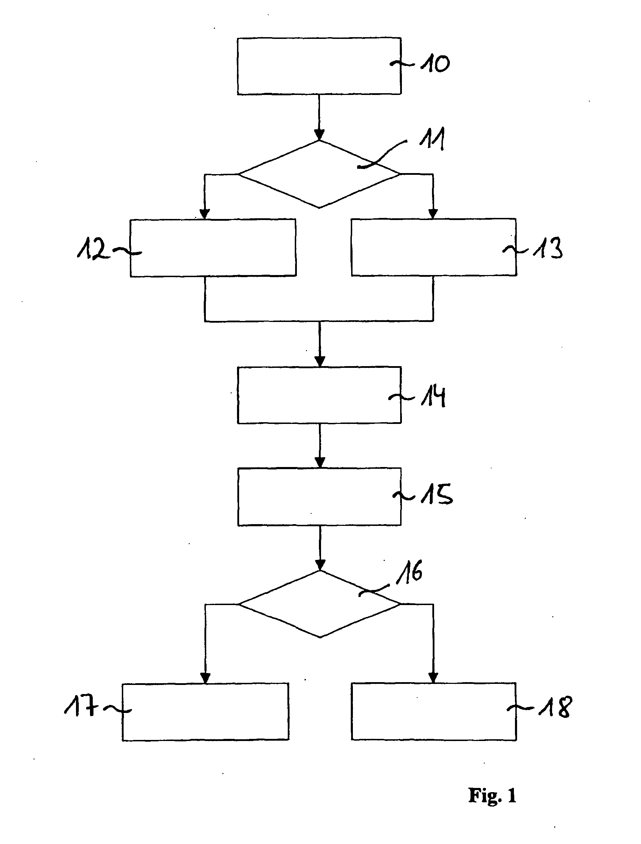

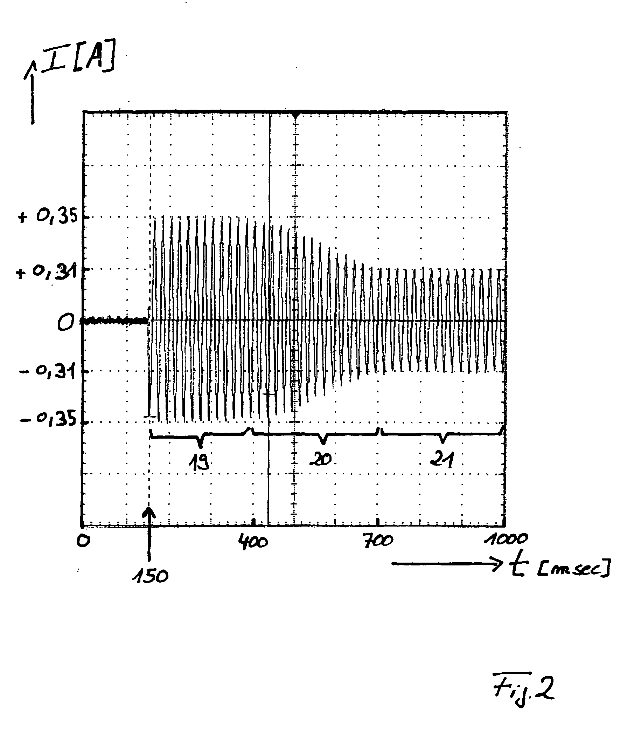

Nachfolgend wird die hier vorliegenden Erfindung unter Bezugnahme auf Fig. 1 und 2 in größerem Detail beschrieben.

Fig. 1 zeigt ein Signalflussdiagramm zur Verdeutlichung des erfindungsgemäßen Verfahrens zur Funktionsüberprüfung eines in einer Heizeinrichtung, vorzugsweise in einem Boiler, integrierten Pumpenmotors. In einem ersten Schritt 10 wird bei Vorliegen einer Wärmeanforderung an die Heizeinrichtung die erfindungsgemäße Funktionsüberprüfung eines in die Heizeinrichtung integrierten Pumpenmotors gestartet. In einem zweiten Schritt 11 wird überprüft, ob ein manuell geregelter bzw. gesteuerter Pumpenmotor oder ein elektronisch geregelter bzw. gesteuerter Pumpenmotor vorliegt. Liegt ein manuell gesteuerter bzw. geregelter Pumpenmotor vor, so wird ausgehend vom Block 11 auf den Block 12 des erfindungsgemäßen Verfahrens verzweigt. Liegt hingegen ein elektronisch geregelter bzw. gesteuerter Pumpenmotor vor, so wird ausgehend vom Block 11 auf den Block 13 verzweigt.

Bei einem manuell gesteuerten bzw. geregelten Pumpenmotor wird in Block 12 eine Spannung an den Pumpenmotor zum Einschalten desselben angelegt, die der Einschaltspannung der manuell eingestellten Geschwindigkeitsstufe des Pumpenmotor entspricht. Bei einem elektronisch gesteuerten bzw. geregelten Pumpenmotor wird im Block 13 zum Einschalten des Pumpenmotors eine maximale Einschaltspannung an den Pumpenmotor angelegt. Unabhängig davon, ob demnach ein manuell gesteuerter bzw. geregelter Pumpenmotor oder ein elektronisch gesteuerter bzw. geregelter Pumpenmotor vorliegt, wird also bei einer Wärmeanforderung an die Heizeinrichtung der Pumpenmotor durch Anlegen einer Einschaltspannung an denselben eingeschaltet. Bei einem elektrisch geregelten bzw. gesteuerten Pumpenmotor wird stets die maximale Einschaltspannung an den Pumpenmotor angelegt. Bei einem manuell gesteuerten bzw. geregelten Pumpenmotor hingegen wird die Einschaltspannung angelegt, die der manuell eingestellten Geschwindigkeitsstufe des Pumpenmotors entspricht.

Unmittelbar nach dem Einschalten des Pumpenmotors durch Anlegen einer Einschaltspannung im Sinne des Schritts 12 bzw. 13 wird im Schritt 14 des erfindungsgemäßen Verfahrens innerhalb eines vorgegebenen Zeitraums nach dem Einschalten des Pumpenmotors ein Pumpenmotorstrom gemessen, Im Schritt 15 wird aus diesem gemessenen Pumpenmotorstrom eine Ableitung des Pumpenmotorstroms gebildet. Die Messung des Pumpenmotorstroms im Sinne des Schritts 14 sowie die Errechnung der Ableitung des Pumpenmotorstroms im Sinne des Schritts 15 erfolgt vorzugsweise innerhalb einer Sekunde nach dem Einschalten des Pumpenmotors als Reaktion auf eine Wärmeanforderung an die Heizeinrichtung.

Innerhalb dieser Zeitspanne wird im Sinne des Schritts 16 des erfindungsgemäßen Verfahrens die ermittelte Ableitung des Pumpenmotorstroms ausgewertet. Bei dieser Auswertung der Ableitung des Pumpenmotorstroms wird festgestellt, ob der Pumpenmotorstrom abfällt oder im Wesentlichen konstant bleibt. Wird dabei festgestellt, dass der Pumpenmotorstrom unmittelbar nach dem Einschalten des Pumpenmotors bzw. nach dem Anlegen der Einschaltspannung an den Pumpenmotor im Wesentlichen konstant bleibt, so kann hieraus auf ein Blockieren des Pumpenmotors geschlossen werden. Wird hingegen aus der Ableitung des Pumpenmotorstroms festgestellt, dass der Pumpenmotorstrom nach dem Anlegen der Einschaltspannung an den Pumpenmotor abfällt, so kann hieraus auf ein Laufen des Pumpenmotors geschlossen werden. Ein laufender Motor zieht nämlich bei angelegter Einschaltspannung einen geringeren Strom als ein eingeschalteter Pumpenmotor. Wird demnach in Schritt 16 auf einen blockierten Pumpenmotor geschlossen, so wird auf Schritt 17 verzweigt und eine Warnmeldung oder Störmeldung angezeigt. Wird hingegen auf einen laufenden Pumpenmotor geschlossen, so wird auf Schritt 18 des erfindungsgemäßen Verfahrens verzweigt.

Fig. 2 zeigt ein Messdiagramm des Pumpenmotorstroms unmittelbar nach dem Einschalten des Pumpenmotors infolge einer Wärmeanforderung, wobei auf der horizontal verlaufenden Achse die Zeit t in ms aufgetragen ist und wobei auf der vertikal verlaufenden Achse der Pumpenmotorstrom I in A aufgetragen ist. Bei 150 ms wird infolge einer Wärmeanforderung eine Einschaltspannung an den Pumpenmotor angelegt. Bei einem stillstehenden Pumpenmotor zieht derselbe bei angelegter Eingangsspannung einen Pumpenmotorstrom von 0,35 A, bei einem laufenden Pumpenmotor zieht derselbe einen Pumpenmotorstrom von 0,31 A. Hieraus folgt unmittelbar, dass der Unterschied zwischen dem Pumpenmotorstrom bei einem stillstehenden Motor und einem laufenden Motor sehr gering ist, wodurch sich die Funktionsüberprüfung des Pumpenmotors erschwert.

Wie bereits erwähnt, wird zur Funktionsüberprüfung des Pumpenmotors im Sinne der hier vorliegenden Erfindung unmittelbar nach dem Auftreten einer Wärmeanforderung und damit nach dem Anlegen einer Einschaltspannung an den Pumpenmotor (was im Ausführungsbeispiel der Fig. 2 bei 150 ms erfolgt) der Pumpenmotorstrom I gemessen und aus dem gemessenen Pumpenmotorstrom I wird die Ableitung ermittelt bzw. errechnet. Ist diese Ableitung in etwa 0, wird also anhand der Ableitung festgestellt, dass der Pumpenmotorstrom im Wesentlichen konstant ist, so kann auf einen blockierten Pumpenmotor geschlossen werden. Wird hingegen anhand der ermittelten Ableitung festgestellt, dass der Pumpenmotorstrom abfällt, so wird auf ein Laufen des Pumpenmotors geschlossen. Fig. 2 zeigt ein Messdiagramm eines laufenden Pumpenmotors.

Wie Fig. 2 entnommen werden kann, untergliedert sich das Anlaufen des Pumpenmotors nach Anlegen einer Einschaltspannung zum Zeitpunkt bei 150 ms im Wesentlichen in drei Phasen. In einer ersten Phase 19 zwischen 150 ms und 400 ms steht der Pumpenmotor im Wesentlichen noch still. In einer zweiten Phase 20 zwischen 400 ms und 700 ms läuft der Pumpenmotor an, wodurch sich der vom Pumpenmotor gezogene Pumpenmotorstrom verändert. In einer dritten Phase 21, die ab 700 ms beginnt, läuft der Pumpenmotor mit konstanter Geschwindigkeit und der Pumpenmotorstrom hat sich auf ein konstantes Niveau eingependelt. Daraus folgt unmittelbar, dass innerhalb einer Zeitspanne von in etwa einer Sekunde nach dem Anlegen einer Einschaltspannung an den Pumpenmotor überprüft werden kann, ob der Pumpenmotor anläuft oder blockiert ist.

Mit dem hier vorliegenden, erfindungsgemäßen Verfahren ist auch dann eine sichere Funktionsüberprüfung eines in einer Heizeinrichtung integrierten Pumpenmotors möglich, wenn die absoluten Differenzen zwischen einem Pumpenmotorstrom bei einem blockierenden oder einem laufenden Pumpenmotor sehr gering sind. Im Sinne der hier vorliegenden Erfindung wird nämlich die Ableitung des Pumpenmotorstroms ermittelt und zur Funktionsüberprüfung herangezogen. Das erfindungsgemäße Verfahren ist besonders geeignet zur Funktionsüberprüfung eines Pumpenwechselspannungsmotors wie zum Beispiel eines Induktionsmotors, insbesondere eines Schaltpolmotors.

### Bezugszeichenliste

- 10: Schritt
- 11: Schritt
- 12: Schritt
- 13: Schritt
- 14: Schritt
- 15: Schritt
- 16: Schritt
- 17: Schritt
- 18: Schritt
- 19: Phase
- 20: Phase
- 21: Phase

## Patentansprüche

1. Verfahren zur Funktionsüberprüfung eines in eine Heizeinrichtung integrierten Pumpenmotors, insbesondere eines Induktionsmotors oder eines Schaltpolmotors, mit folgenden Schritten: a) bei Vorliegen einer Wärmeanforderung an die Heizeinrichtung wird der Pumpenmotor durch Anlegen einer Einschaltspannung eingeschaltet; b) unmittelbar nach dem Anlegen der Einschaltspannung wird der Pumpenmotorstrom über einen definierten Zeitraum gemessen und aus dieser Messung wird die zeitliche Ableitung des Pumpenmotorstroms ermittelt; c) aus der ermittelten zeitlichen Ableitung des Pumpenmotorstroms wird geschlossen, ob der Pumpenmotor läuft oder blockiert ist, und zwar derart, dass dann, wenn aus der zeitlichen Ableitung des Pumpenmotorstroms festgestellt wird, dass der Pumpenmotorstrom im wesentlichen konstant bleibt, auf ein Blockieren des Pumpenmotors geschlossen wird, und dass dann, wenn aus der zeitlichen Ableitung des Pumpenmotorstroms festgestellt wird, dass der Pumpenmotorstrom abfällt, auf ein Laufen des Pumpenmotors geschlossen wird.

2. Verfahren nach Anspruch 1, **dadurch gekennzeichnet, dass** der Pumpenmotorstrom über einen Zeitraum von einer Sekunde nach dem Vorliegen der Wärmeanforderung an die Heizeinrichtung gemessen wird, und dass während dieses Zeitraums die Ableitung des Pumpenmotorstroms ermittelt wird.

3. Verfahren nach Anspruch 1 oder 2, **dadurch gekennzeichnet, dass** zur Funktionsüberprüfung eines elektronisch geregelten bzw. gesteuerten Pumpenmotors zum Einschalten des Pumpenmotors eine maximale Einschaltspannung an den Pumpenmotor angelegt wird.

4. Heizeinrichtung mit einem in dieselbe integrierten Pumpenmotor, insbesondere mit einem Induktionsmotor oder einem Schaltpolmotor, um bei Vorliegen einer Wärmeanforderung das zu erhitzende Wasser durch die Heizeinrichtung zu fördern, wobei bei Vorliegen einer Wärmeanforderung an die Heizeinrichtung der Pumpenmotor durch Anlegen einer Einschaltspannung eingeschaltet wird, **gekennzeichnet durch** eine Einrichtung, die unmittelbar nach dem Anlegen der Einschaltspannung den Pumpenmotorstrom über einen definierten Zeitraum misst und aus dieser Messung die zeitliche Ableitung des Pumpenmotorstroms ermittelt, und die aus der ermittelten zeitlichen Ableitung des Pumpenmotorstroms schließt, ob der Pumpenmotor läuft oder blockiert ist, und zwar derart, dass dieselbe dann, wenn aus der zeitlichen Ableitung des Pumpenmotorstroms festgestellt wird, dass der Pumpenmotorstrom im wesentlichen konstant bleibt, auf ein Blockieren des Pumpenmotors schließt, und dass dieselbe dann, wenn aus der zeitlichen Ableitung des Pumpenmotorstroms festgestellt wird, dass der Pumpenmotorstrom abfällt, auf ein Laufen des Pumpenmotors schließt.

## Claims

1. Method for functional checking of a pump motor which is integrated in a heating device, in particular an induction motor or a shaded-pole motor, comprising the following steps: a) the pump motor is switched on by applying a switch-on voltage when a request for heat is made on the heating device; b) the pump motor current is measured over a defined period of time immediately after the switch-on voltage is applied and the time derivative of the pump motor current is determined from this measurement; c) the determined time derivative of the pump motor current is used to draw a conclusion as to whether the pump motor is running or is blocked, to be precise in such a way that the conclusion that the pump motor is blocked is drawn when it is established from the time derivative of the pump motor current that the pump motor current remains substantially constant, and that the conclusion that the pump motor is running is drawn when it is established from the time derivative of the pump motor current that the pump motor current is falling.

2. Method according to Claim 1, **characterized in that**, after the request for heat is made on the heating device, the pump motor current is measured over a period of time of one second, and **in that** the derivative of the pump motor current is determined during this period of time.

3. Method according to Claim 1 or 2, **characterized in that** a maximum switch-on voltage is applied to the pump motor for functional checking of a pump motor which is subjected to electronic open-loop or closed-loop control in order to switch on the pump motor.

4. Heating device having an integrated pump motor, in particular having an induction motor or a shaded-pole motor, in order to convey the water, which is to be heated, through the heating device when a request for heat is made, with the pump motor being switched on by applying a switch-on voltage when a request for heat is made on the heating device, **characterized by** a device which measures the pump motor current over a defined period of time immediately after the switch-on voltage is applied and determines the time derivative of the pump motor current from this measurement, and which uses the determined time derivative of the pump motor current to draw a conclusion as to whether the pump motor is running or is blocked, to be precise in such a way that the said device draws the conclusion that the pump motor is blocked when it is established from the time derivative of the pump motor current that the pump motor current remains substantially constant, and that the said device draws the conclusion that the pump motor is running when it is established from the time derivative of the pump motor current that the pump motor current is falling.

## Revendications

1. Procédé pour contrôler le fonctionnement d'un moteur de pompe intégré dans un appareil de chauffage, notamment un moteur à induction ou un moteur à bague de déphasage, comprenant les étapes suivantes : a) en présence d'une demande de chauffage adressée au dispositif de chauffage, le moteur de la pompe est mis en marche en appliquant une tension de mise en marche; b) immédiatement après l'application de la tension de mise en marche, le courant du moteur de la pompe est mesuré sur une période donnée et la dérivée dans le temps du courant du moteur de la pompe est déterminée à partir de cette mesure : c) il est conclu de la dérivée dans le temps du courant du moteur de la pompe si le moteur de la pompe fonctionne ou s'il est bloqué, et ce de telle sorte que si la dérivée dans le temps du courant du moteur de la pompe amène à constater que le courant du moteur de la pompe reste pour l'essentiel constant, la conclusion est un blocage du moteur de la pompe et que si la dérivée dans le temps du courant du moteur de la pompe amène à constater que le courant du moteur de la pompe diminue, la conclusion est une rotation du moteur de la pompe.

2. Procédé selon la revendication 1, **caractérisé en ce que** le courant du moteur de la pompe est mesuré pendant une période d'une seconde après la présence d'une demande de chauffage adressée au dispositif de chauffage et que la dérivée du courant du moteur de la pompe est déterminée pendant cette période.

3. Procédé selon la revendication 1 ou 2,
**caractérisé en ce qu'**une tension de mise en marche maximale est appliquée au moteur de la pompe pour la mise en marche du moteur de la pompe afin de contrôler le fonctionnement d'un moteur de pompe à régulation ou à commande électronique.

4. Dispositif de chauffage comprenant un moteur de pompe intégré dans celui-ci, comprenant notamment un moteur à induction ou un moteur à bague de déphasage, pour transporter l'eau à chauffer à travers le dispositif de chauffage en présence d'une demande de chauffage, le moteur de la pompe étant mis en marche en appliquant une tension de mise en marche en présence d'une demande de chauffage adressée au dispositif de chauffage, **caractérisé par** un dispositif qui, immédiatement après l'application de la tension de mise en marche, mesure le courant du moteur de la pompe sur une période donnée et détermine à partir de cette mesure la dérivée dans le temps du courant du moteur de la pompe et qui conclut de la dérivée dans le temps du courant du moteur de la pompe si le moteur de la pompe fonctionne ou s'il est bloqué, et ce de telle sorte que si la dérivée dans le temps du courant du moteur de la pompe amène à constater que le courant du moteur de la pompe reste pour l'essentiel constant, il conclut à un blocage du moteur de la pompe et que si la dérivée dans le temps du courant du moteur de la pompe amène à constater que le courant du moteur de la pompe diminue, il conclut à une rotation du moteur de la pompe.
